# EUROPEAN PATENT APPLICATION

(11) **EP 4 575 606 A1**
(43) Date of publication of application: **25.06.2025**
(21) Application number: 24219669.9
(22) Date of filing: 13.12.2024
(51) Int. Cl.: G02B 23/16, G02B 7/183

(54) **LARGE TELESCOPE CALIBRATION TECHNIQUES**

(30) Priority: 15.12.2023 US 202318541662
(71) Applicant: CAES Systems LLC, Arlington, Virginia 22202 (US)
(72) Inventor: SEMUSKIE, Stephen, Arlington, Virginia, 22202 (US); KEIM, Brian, Arlington, Virginia, 22202 (US)
(74) Representative: Papula Oy

(57) **Abstract**

Systems, apparatuses, telescope products and methods for calibrating telescope systems are provided. Specifically, calibration techniques are provided that allow for the establishment of an improved encoder offset data structures. The techniques may include generating an azimuth error map and an elevation error map for a telescope system. The techniques may include generating an encoder offset data structure for the telescope system based on a combination of the azimuth error map and the elevation error map and modifying an encoder correction model for the telescope system based on the encoder offset data structure.

## Description

### TECHNOLOGICAL FIELD

Example embodiments of the present disclosure relates generally to telescope systems, and more particularly to calibration systems and methods for calibrating large telescope systems.

### BACKGROUND

Telescope systems are used in a variety of industries, including the space industry, to detect, track, and/or otherwise analyze celestial objects such as stars, planets, satellites, and/or the like. One such application includes laser ranging techniques for determining the distance between a celestial object and a telescope system. To do so, a telescope system may direct a laser to a targeted celestial object (e.g., satellite). As a result of the laser, a signal may be reflected from the targeted celestial object, which is received by the telescope system. The distance between the telescope system and the celestial object may be computed based on the transit time (e.g., at the speed of light) between the transmission of the laser and the reception of the signal responsive to the laser. This distance calculation may be used to detect the presence and/or the location of the targeted celestial object, track the targeted celestial object, and/or otherwise analyze the targeted celestial object.

The accuracy of a telescope system may be based on the calibration of the telescope system, especially the angular accuracy of each axis. Traditionally, telescope systems may be calibrated using various techniques, such as star calibration, mechanical mapping, and/or the like. However, such techniques are prone to residual errors resulting in reduced accuracy that may be aggravated overtime due to bearing wobble and other offsetting phenomena. Traditional calibration techniques either ignore these errors or adjust location and/or distance calculations to compensate for an expected error. However, such techniques for calculating expected errors are limited to mechanical axes and fail to comprehensively map residual errors affiliated with other portions of a telescope system, such as a coude path.

Through applied effort, ingenuity, and innovation, many of these identified problems have been solved by developing solutions that are included in embodiments of the present disclosure, many examples of which are described in detail herein.

### BRIEF SUMMARY

Various embodiments described herein relate to systems, apparatuses, products, and methods for calibrating telescope systems, including an optical path mapping solution for leveraging star calibration techniques to account for residual error in alignment of a telescope system optical path relative to the angular feedback device used. To do so, the techniques of the present disclosure provide a multi-stage mapping process for performing a reduced set of star calibration processes tailored to a single axis at a time, while keeping ancillary axes constant (and/or within a threshold degree of freedom). The multi-stage mapping process may include individually mapping each of a plurality of axes of interest (e.g., an elevation axis, an azimuth axis, etc.) and then combining the plurality of resulting error maps to calibrate a telescope system. By doing so, the present disclosure may enable the mapping of residual errors in a telescope system (e.g., encoder, etc.) that are traditionally undetectable using star calibration and mechanical axes mapping techniques. Ultimately, this results in improved telescope systems with improved accuracy by reducing residual errors, among other advantages.

In some embodiments, a telescope alignment method includes generating an azimuth error map for a telescope system; generating an elevation error map for the telescope system; generating an encoder offset data structure for the telescope system based on a combination of the azimuth error map and the elevation error map; and modifying an encoder correction model for the telescope system based on the encoder offset data structure.

In some embodiments, a computing system includes memory and one or more processors communicatively coupled to the memory, the one or more processors are configured to generate an azimuth error map for a telescope system; generate an elevation error map for the telescope system; generate an encoder offset data structure for the telescope system based on a combination of the azimuth error map and the elevation error map; and modify an encoder correction model for the telescope system based on the encoder offset data structure.

In some embodiments, one or more non-transitory computer-readable storage media includes instructions that, when executed by one or more processors, cause the one or more processors to generate an azimuth error map for a telescope system; generate an elevation error map for the telescope system; generate an encoder offset data structure for the telescope system based on a combination of the azimuth error map and the elevation error map; and modify an encoder correction model for the telescope system based on the encoder offset data structure.

The above summary is provided merely for purposes of summarizing some example embodiments to provide a basic understanding of some aspects of the disclosure. Accordingly, it will be appreciated that the above-described embodiments are merely examples and should not be construed to narrow the scope or spirit of the disclosure in any way. It will also be appreciated that the scope of the disclosure encompasses many potential embodiments in addition to those here summarized, some of which will be further described below.

### BRIEF SUMMARY OF THE DRAWINGS

Having thus described certain example embodiments of the present disclosure in general terms, reference will now be made to the accompanying drawings, which are not necessarily drawn to scale, and wherein:
FIG. 1 illustrates a first view of an example telescope system in accordance with one or more embodiments of the present disclosure.
FIG. 2 illustrates a second view of an example telescope system in accordance with one or more embodiments of the present disclosure.
FIG. 3 is a dataflow diagram showing example data structures and modules for calibrating a telescope system in accordance with one or more embodiments discussed herein.
FIG. 4 is an operational example of an azimuth error map in accordance with one or more embodiments of the present disclosure.
FIG. 5 is an operational example of an elevation error in accordance with one or more embodiments of the present disclosure.
FIG. 6 is an operational example of a star alignment comparison in accordance with one or more embodiments of the present disclosure.
FIG. 7 is an operational example of a combined error map in accordance with one or more embodiments of the present disclosure.
FIG. 8 is a flowchart showing an example multi-stage calibration process for calibrating a telescope system in accordance with one or more embodiments of the present disclosure.
FIG. 9 provides a schematic of a computing entity in accordance with one or more embodiments of the present disclosure.
FIG. 10 provides an illustrative schematic representative of an external computing entity that may be used in conjunction with one or more embodiments of the present disclosure.

### DETAILED DESCRIPTION

Embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

### I. Overview

Various embodiments of the present disclosure are directed to improved systems, apparatuses, products, and methods for calibrating large telescope systems. To overcome deficiencies with conventional telescope calibration techniques, such as mechanical axis alignment processes, the present disclosure provides single axis mapping techniques for individually generating axis-specific error maps that, when taken together, enable the correction of angular position estimates across a telescope's full range of motion. To do so, some embodiments of the present disclosure implement a multi-stage error mapping process that individually generates an elevation and azimuth error map for a telescope system. Once generated, the error maps may be combined to generate an encoder offset data structure that compensates for errors across the full range of a telescope's motion. In this manner, the systems and methods of the present disclosure improve precision of telescope measurements by accurately predicting encoder offsets that may be applied to refine position estimates output by any mapped telescope system and increasing the effectiveness of further angular calibration methods.

By mapping each axis of a telescope system, some of the techniques of the present disclosure may reduce pointing errors. This, in turn, increases rotational accuracy by removing encoder errors due to bearing and encoder eccentricities, encoder errors, bearing wobble, mechanical stack up errors, and/or the like. As known in the relevant art, mechanical and optical axes defined by various telescope systems are never truly aligned and misalignments result in pointing inaccuracies that may not align with mechanically mapped errors. In fact, at least directly mounted optical sensors have static error offsets from the mechanical axis. Optical path systems have added errors due to mirror misalignments. For example, the alignment of mirrors may create a moveable optical axis that is not fixed to the mechanical axis alignment of the system which leads to the proliferation of static offsets even in mechanically mapped systems.

Traditionally, errors are mapped by applying star calibration techniques to a combination of axes at the same time. However, such techniques often result in unreliable error offsets as they try to estimate errors in each axis that are coupled together in a single measurement. Other times, mechanical axis mapping techniques are used. However, these techniques result in offsets that fail to consider additional error due to repeatable movements and offsets of the optics of the telescope system as it is rotated about azimuth and elevation axes. Some of the techniques of the present disclosure improve upon these traditional solutions by using star location data to create a combined error map. As shown herein, the results significantly reduce error offsets, in some cases to under ±4 arcsecs. In some examples, the techniques of the present disclosure may complement post processing techniques, such as star calibration, to further improve positional accuracy. In such a case, the techniques of the present disclosure may reduce the time to convergence, while increasing the resulting accuracies of traditional star calibration techniques.

It should be readily appreciated that the embodiments of the systems, apparatus, and methods described herein may be configured in various additional and alternative manners in addition to those expressly described herein.

### II. Telescope System

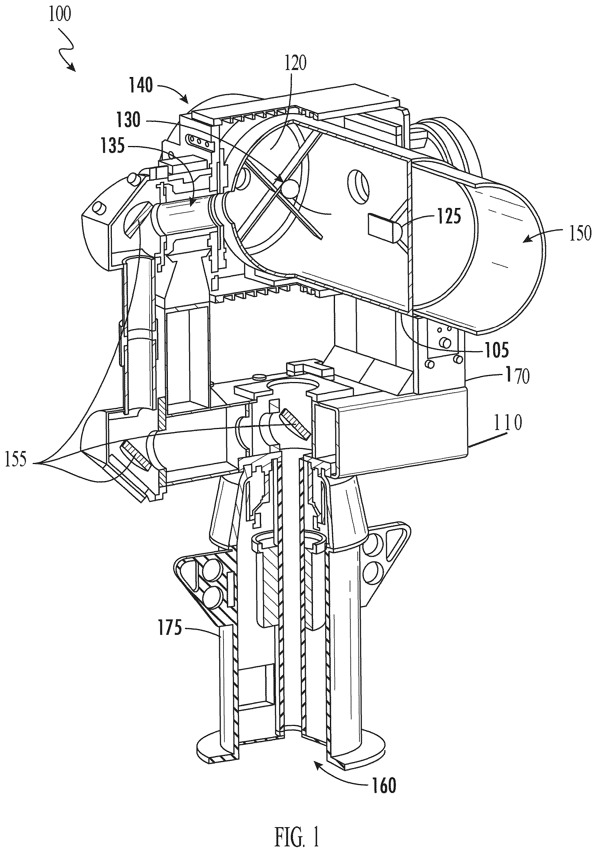

FIG. 1 illustrates a first view of an example telescope system 100 in accordance with one or more embodiments of the present disclosure. The telescope system 100 may include one or more of a telescope assembly 105, a gimbal assembly 110, and a payload platform 115. As shown, the telescope system 100 may include a coude path system. However, a person of ordinary skill in the art will understand that the techniques of the present disclosure may be used with both coude path and non-coude path systems. While the advantages of the present disclosure may apply to telescope systems that include a coude path to correct a greater number of inherent errors (e.g., due to bearing wobble, etc. as the system exercises a greater range of movement) with coude path systems, the techniques of the present disclosure are equally applicable to non-coude path system. For example, the techniques of the present disclosure may be leveraged in any type of telescope system to remove encoder errors due to bearing and encoder eccentricities, encoder errors, bearing wobble, mechanical stack up errors, and/or the like.

The telescope assembly 105 may include an optical tube assembly. The optical tube assembly may include a housing that defines a frontend 150 and a backend 140 of the telescope assembly 105. The telescope assembly 105 may include a plurality of mirror assemblies disposed within the housing. The plurality of mirror assemblies may include a primary mirror assembly 120 disposed proximate to the backend 140 of the telescope assembly 105, a secondary mirror assembly 125 disposed proximate to the frontend 150 of the telescope assembly 105, and/or a tertiary mirror assembly 130 disposed between the primary mirror assembly 120 and the secondary mirror assembly 125.

Each of the plurality of mirror assemblies may include one or more reflective surfaces for reflecting light that enters the housing of the telescope assembly 105. The reflective surfaces, for example, may include curved surfaces for reflecting light at one or more angles. In this manner, light that enters the housing of the telescope assembly 105 may be reflected from the primary mirror assembly 120 to the secondary mirror assembly 125 and/or from the secondary mirror assembly 125 to the tertiary mirror assembly 130. The tertiary mirror assembly 130 may reflect the light at an angle to exit the housing of the telescope assembly 105 through the coude path 135. By way of example, the light may be reflected from the tertiary mirror assembly 130 at a forty-five-degree angle to exit the housing of the telescope assembly 105 through a coude path 135 within the gimbal assembly 110.

The gimbal assembly 110 may include a plurality of gimbal mirrors 155 that define a coude path 135 from the housing of the telescope assembly 105 to an end point 160. An end point 160, for example, may include a pitted assembly to an optic bench. The gimbal assembly 110 may include a yoke assembly 170 and an azimuth assembly 175. The azimuth assembly 175 may include a vertical base platform (e.g., a riser). The yoke assembly 170 may include one or more arms (e.g., two arms, etc.) supported by the azimuth assembly 175. A payload platform 115 may couple the telescope assembly 105 to the yoke assembly 170.

The payload platform 115 includes a plurality of mechanical adjusters for adjustably mounting the telescope assembly 105 to the gimbal assembly 110. For example, the telescope assembly 105 may be mounted to the gimbal assembly 110 at a mounting position. The telescope assembly 105 may be mounted at the mounting position by the plurality of mechanical adjusters of the payload platform 115. The plurality of mechanical adjusters may provide six degree-of-freedom control of the mounting position of the telescope assembly 105 with respect to the gimbal assembly 110. Using the mechanical adjusters, the telescope assembly 105 may be repositioned in six degrees of freedom to precisely align the telescope assembly 105 with the gimbal assembly 110.

The plurality of mechanical adjusters, for example, may be utilized to align one or more axes of the telescope assembly 105 with one or more axes of the gimbal assembly 110. In this regard, the telescope system 100 may define an elevation axis and an azimuth axis. The telescope assembly 105 may be moved along either axis to point at a particular location. In some examples, the elevation axis may allow for a zero to one-hundred and eighty degree range of motion. In some examples, the azimuth axis may allow for a zero to three-hundred and sixty degree range of motion.

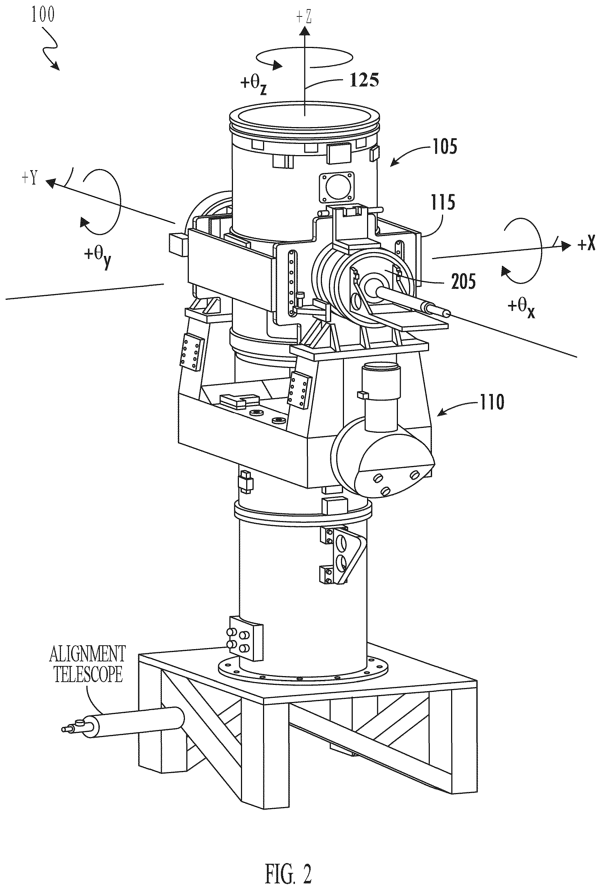

FIG. 2 illustrates a second view of an example telescope system 100 in accordance with one or more embodiments of the present disclosure. The telescope system 100 may include a gimbal design which allows the gimbal axes to be precisely aligned for intersection and orthogonality, and is equipped with interface controls (e.g., mechanical adjusters 205, such as push-pull screws, control adjustors, etc.) to adjust a telescope assembly 105 in a six degree of freedom manner (x-y-z tilt and x-y-z translation) with respect to the gimbal assembly 110.

The gimbal assembly 110 may include a payload platform 115. The payload platform 115 may include a plurality of mechanical adjusters 205 operable to mechanical adjust the gimbal assembly 110 and/or the telescope assembly 105 to redirect and/or reposition the telescope system 100. The plurality of mechanical adjusters 205 may be operable to translate the telescope assembly 105 along three primary directions (e.g., x, y, z) and rotate the telescope assembly 105 along three rotational directions (e.g., *θₓ, θ_{y}, θ_{z}*). In some examples, the gimbal design may have a gimbal-to-telescope interface design that allows the installed telescope assembly 105 to be repositioned in six degrees of freedom with respect to the gimbal assembly 110. In some examples, the mechanical adjusters 205 may be operable to reposition the telescope assembly 105 along an elevation axis and/or an azimuth axis.

### III. Telescope Calibration

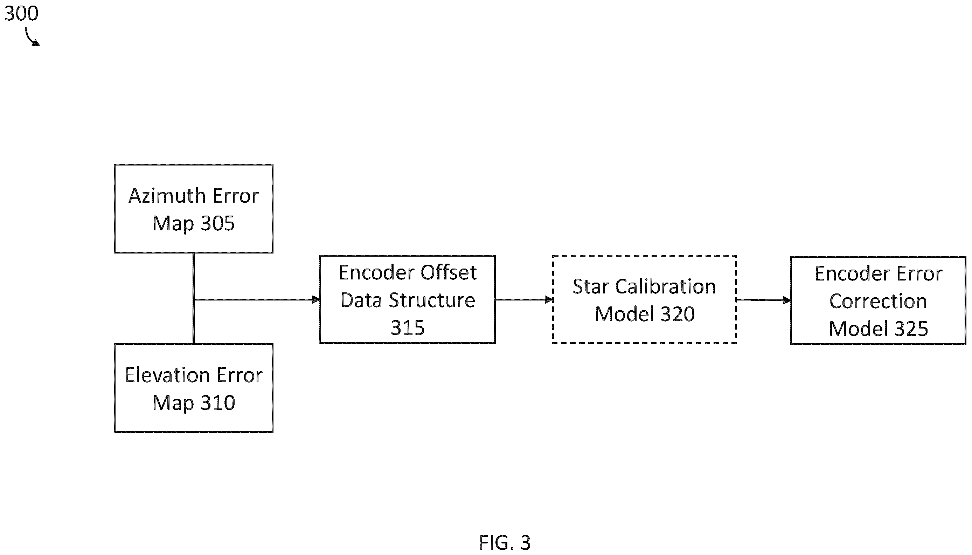

FIG. 3 is a dataflow diagram 300 showing example data structures and modules for calibrating a telescope system in accordance with some embodiments discussed herein. As shown, the dataflow diagram 300 may include a series of data structures for generating an encoder offset data structure 315 for a telescope system. The encoder offset data structure 315, for example, may be generated using an encoder offset data structure 315 that combines errors from a plurality of individually mapped axes, as represented by the azimuth error map 305 and elevation error map 310.

In some embodiments, an azimuth error map 305 is generated for the telescope system. In some examples, the azimuth error map 305 may be generated by establishing a static elevation angle and/or an elevation angle range for the telescope system and generating a plurality of azimuth-based encoder errors for the telescope system that correspond to the static elevation angle and/or an elevation angle range. In some examples, each of the plurality of azimuth-based encoder errors may correspond to a particular azimuth angle. By way of example, the plurality of azimuth-based encoder errors may include a respective azimuth-based encoder error for each azimuth angle between zero and three-hundred and sixty degrees.

In some embodiments, the azimuth error map 305 may be generated by establishing an elevation angle range. The elevation angle range may include one or more elevation angles within a five-degree range. By way of example, the five-degree range may include a range between fifteen and twenty degrees. In some examples, the elevation angle range may be based on a number of celestial objects within a field of view of the telescope system at one or more azimuth angles between zero and three-hundred and sixty degrees. By way of example, the elevation angle range may be dynamically determined based on a celestial object threshold. In some examples, the elevation angle range may include the lowest elevation angle range (e.g., to reduce elevation error biases, etc.) that includes a number of celestial objects within a field of view of the telescope system that achieves the celestial object threshold. In some examples, the variance of the elevation angle range may be based on the celestial object threshold. For instance, the variance of the elevation angle range may include the lowest variance achievable that includes a number of celestial objects within a field of view of the telescope system that achieves the celestial object threshold. The celestial object threshold may include any number of celestial objects including, as examples, ten, twenty, twenty-four, and/or the like.

In some embodiments, an azimuth-based encoder error is a single axis error measurement for the telescope system. In some examples, the azimuth-based encoder error may be generated using one or more star calibration techniques. For instance, an azimuth-based encoder error may be generated by establishing an azimuth angle range for the telescope system and identifying a plurality of celestial objects within a field of view of the telescope system. The azimuth-based encoder error may then be generated based on a measured position and a ground truth position corresponding to at least one of the plurality of celestial objects.

In some embodiments, the azimuth error map 305 is generated by manually and/or automatically moving the telescope system between a range of azimuth angles. The telescope system, for example, may be moved across the range of azimuth angles while staying within the established elevation angle range. In some examples, the range of azimuth angles may be based on a full range of motion of the telescope system. For example, the range of azimuth angles may include a full three-hundred and sixty degree travel range of the telescope system. At each angle, or portion of an angle, within the range of azimuth angles, an azimuth-based encoder error may be generated that corresponds to the angle. The azimuth-based encoder error may be stored with a plurality of additional azimuth-based encoder errors to generate the azimuth error map 305.

In some embodiments, the telescope system is automatically moved between angles of the range of azimuth angles. For example, the telescope system may include a plurality of automated mechanical adjusters that are communicatively coupled to a control system, such as the computing systems described herein. The control system may include instructions that, when executed by one or more processors, may initiate one or more control instructions to cause the automated mechanical adjusters to automatically move the telescope system to a particular azimuth angle. In some examples, the azimuth error map 305 may be generated by iteratively moving the telescope system to each angle within the range of azimuth angles.

In some embodiments, an elevation error map 310 is generated for the telescope system. In some examples, the elevation error map 310 may be generated by establishing a static azimuth angle and/or an azimuth angle range for the telescope system and generating a plurality of elevation-based encoder errors for the telescope system that correspond to the static azimuth angle and/or an azimuth angle range. In some examples, each of the plurality of elevation-based encoder errors may correspond to a particular elevation angle. By way of example, the plurality of elevation-based encoder errors may include a respective elevation-based encoder error for each elevation angle between zero and one hundred and eighty degrees.

In some embodiments, the azimuth error map 305 may be generated by establishing an azimuth angle range. The azimuth angle range may include one or more azimuth angles within a five-degree range. In some examples, the azimuth angle range may be based on a number of celestial objects within a field of view of the telescope system at one or more elevation angles between zero and one hundred and eighty degrees. By way of example, the azimuth angle range may be dynamically determined based on the celestial object threshold. In some examples, the azimuth angle range may include any azimuth angle range that includes a number of celestial objects within a field of view of the telescope system that achieves the celestial object threshold. In some examples, the variance of the azimuth angle range may be based on the celestial object threshold. For instance, the variance of the azimuth angle range may include the lowest variance achievable that includes a number of celestial objects within a field of view of the telescope system that achieves the celestial object threshold.

In some embodiments, an elevation-based encoder error is a single axis error measurement for the telescope system. In some examples, the elevation-based encoder error may be generated using one or more star calibration techniques. For instance, an elevation-based encoder error may be generated by establishing an elevation angle range for the telescope system and identifying a plurality of celestial objects within a field of view of the telescope system. The elevation-based encoder error may then be generated based on a measured position and a ground truth position corresponding to at least one of the plurality of celestial objects.

In some embodiments, the elevation error map 310 is generated by manually and/or automatically moving the telescope system between a range of elevation angles. The telescope system, for example, may be moved across the range of elevation angles while staying within the established azimuth angle range. In some examples, the range of elevation angles may be based on a full range of motion of the telescope system. For example, the range of elevation angles may include a one-hundred and eighty degree travel range, a reduced ten to one-hundred and seventy degree travel range, and/or the like. At each angle within the range of elevation angles, an elevation-based encoder error may be generated that corresponds to the angle. The elevation-based encoder error may be stored with a plurality of additional elevation-based encoder errors to generate the azimuth error map 305.

In some embodiments, the telescope system is automatically moved between angles of the range of elevation angles. For example, the telescope system may include a plurality of automated mechanical adjusters that are communicatively coupled to a control system, such as the computing systems described herein. The control system may include instructions that, when executed by one or more processors, may initiate one or more control instructions to cause the automated mechanical adjusters to automatically move the telescope system to a particular elevation angle. In some examples, the elevation error map 310 may be generated by iteratively moving the telescope system to each angle within the range of elevation angles.

In some embodiments, an encoder offset data structure 315 is generated for the telescope system based on the azimuth error map 305 and the elevation error map 310. For example, the encoder offset data structure 315 may be generated based on a combination of the azimuth error map and the elevation error map. In some examples, the encoder offset data structure 315 may be generated by overlaying the azimuth error map 305 to the elevation error map 310. In some examples, the encoder offset data structure 315 may include a three-dimensional, or hemispherical mapping, which combines the azimuth-based encoder errors and the elevation-based encoder errors from each of the azimuth error map 305 and the elevation error map 310, respectively. In addition, or alternatively, the encoder offset data structure 315 may include a plurality of two-dimensional look up tables that reflect the azimuth-based encoder errors and the elevation-based encoder errors from each of the azimuth error map 305 and the elevation error map 310, respectively.

In some examples, the encoder offset data structure 315 may include a combination of errors (e.g., elevation-based encoder error and azimuth-based encoder error) for each degree, or portion of a degree, within a travel range of the telescope system. For example, the encoder offset data structure 315 may include a lookup table with a plurality of encoder offset values. For instance, each encoder offset value may correspond to a particular azimuth angle and/or a particular elevation angle.

In some embodiments, the encoder offset data structure 315 is input to a star calibration model 320 to further calibrate the telescope system. For example, the star calibration software, such as Telescope Pointing Analysis System (TPoint), and/or the like, may be used to refine the encoder offset data structure 315. In some examples, the encoder offset data structure 315 may reduce the time and processing resources for star calibration software to converge, while improving the accuracy of the star calibration software results

In some embodiments, the encoder offset data structure 315 is regenerated to compensate for alignment deviations over time. For example, the encoder offset data structure 315 may be regenerated at a defined frequency, such as a month and/or the like.

In some embodiments, the encoder offset data structure 315 is provided for use with an encoder error correction model 325. For example, an encoder error correction model 330 for the telescope system may be modified based on the encoder error correction model 325. In some examples, the encoder error correction model 325 may be updated at a defined frequency. By way of example, the encoder error correction model 325 may include a control code that integrates the encoder offset data structure 315 and/or one or more further refinements from the star calibration model 320. In some examples, the encoder offset data structure 315 may include a lookup table that interpolates between the various three-dimensional degrees within a telescopes range of motion. In some examples, the encoder offset data structure 315 may be integrated with (e.g., by updating an reference to the tables, updating model parameters, etc.) the encoder error correction model 325 to enable the model to calculate a respective offset for a current position of the telescope system. The encoder error correction model 325 may apply the respective offset to location estimates before outputting the estimate to an end user.

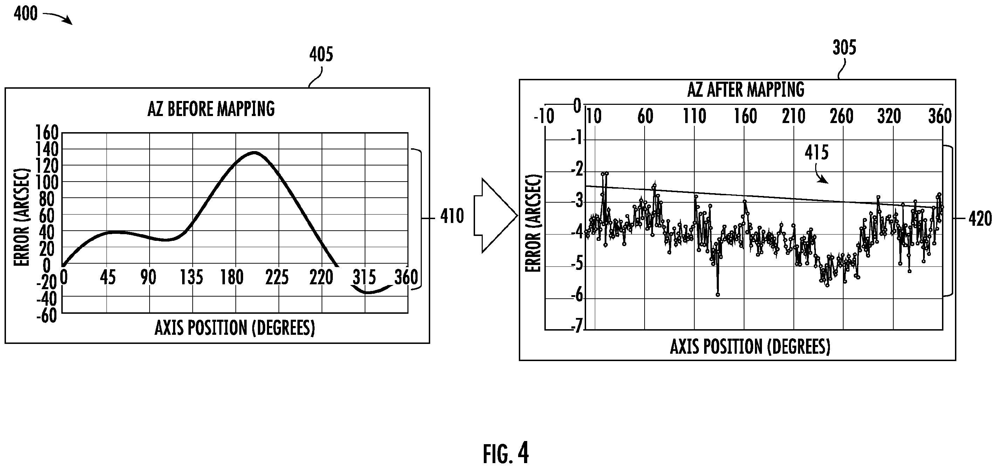

FIG. 4 is an operational example 400 of an azimuth error map in accordance with one or more embodiments of the present disclosure. The operational example 400 depicts a first and second azimuth error map for a telescope system.

The first error map depicts an original azimuth error map 405 that includes a plurality of original error datapoints for an encoder of a telescope system. The original error datapoints, for example, may be identified using one or more error measurement devices, such as an interferometer, and/or the like. By way of example, the original error datapoints may include residual error datapoints that may be measured externally. Each may represent an error within an encoder that includes a repeatable error to be removed using the techniques of the present disclosure. In some examples, the plurality of original error datapoints may be identified before one or more calibration techniques of the present disclosure. As shown by the original azimuth error map 405, the plurality of original error datapoints may include an original error range 410 of 180 arcsecs over 360 degrees.

The second error map depicts an example azimuth error map 305 that is generated after one or more mapping techniques of the present disclosure. The azimuth error map 305 may include a plurality of azimuth-based encoder errors 415 for an encoder of a telescope system. The azimuth-based encoder errors 415, for example, may be identified using one or more error measurement devices, such as an interferometer, and/or the like, after one or more mapping techniques of the present disclosure are applied. As shown by the azimuth error map 305, the plurality of azimuth-based encoder errors 415 may include an error corrected range 420 of 7 arcsecs over 360 degrees - a significant reduction from the original error range 410. As described here, the azimuth error map 305 may be used to update control algorithms, such as the encoder error correction model described herein, to act as offset for one or more positioning processes.

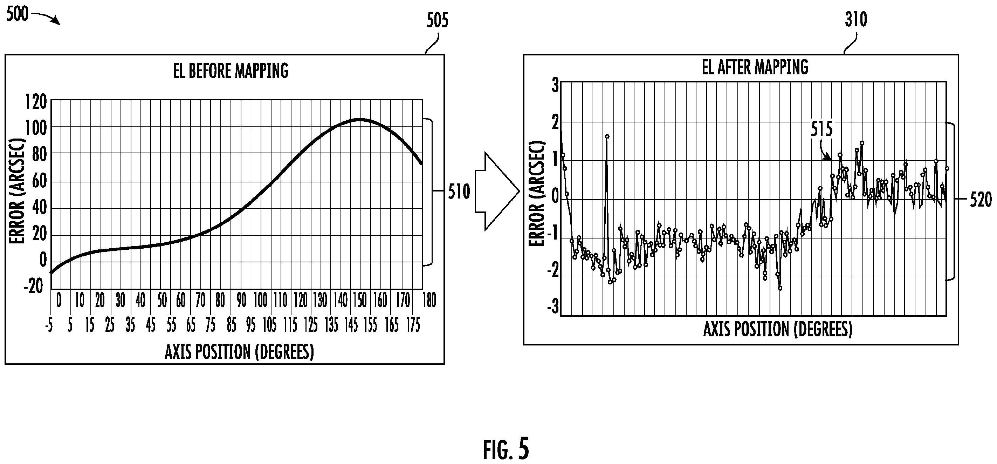

FIG. 5 is an operational example 500 of an elevation error in accordance with one or more embodiments of the present disclosure. The operational example 500 depicts a first and second elevation error map for a telescope system.

The first error map depicts an original elevation error map 505 that includes a plurality of original error datapoints for an encoder of a telescope system. The original error datapoints, for example, may be identified using one or more error measurement devices, such as an interferometer, and/or the like. By way of example, the original error datapoints may include residual error datapoints that may be measured externally. Each may represent an error within an encoder that includes a repeatable error to be removed using the techniques of the present disclosure. In some examples, the plurality of original error datapoints may be identified before one or more calibration techniques of the present disclosure. As shown by the original elevation error map 505, the plurality of original error datapoints may include an original error range 510 of 180 arcsecs over 190 degrees.

The second error map depicts an example elevation error map 310 that is generated after one or more mapping techniques of the present disclosure. The elevation error map 310 may include a plurality of elevation-based encoder errors 515 for an encoder of a telescope system. The elevation-based encoder error 515, for example, may be identified using one or more error measurement devices, such as an interferometer, and/or the like, after one or more mapping techniques of the present disclosure are applied. As shown by the elevation error map 310, the plurality of elevation-based encoder errors 515 may include a corrected error range 520 of 7 arcsecs over 190 degrees - a significant reduction from the original error range 510. As described here, the elevation error map 310 may be used to update control algorithms, such as the encoder error correction model described herein, to act as offset for one or more positioning processes.

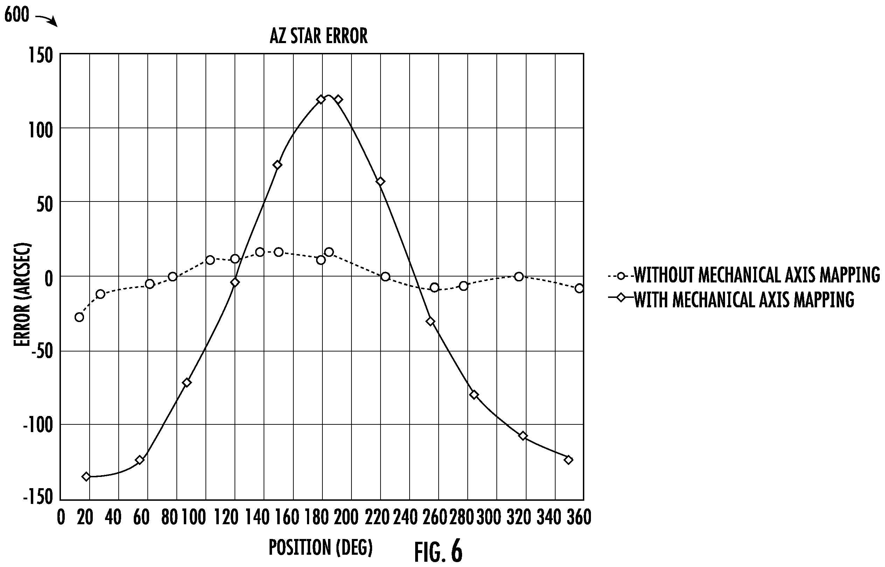

FIG. 6 is an operational example 600 of a star alignment comparison in accordance with one or more embodiments of the present disclosure. The star alignment comparison illustrates relative error offsets generated using one or more different star alignment operations. For instance, the different star alignment operations may include traditional mechanical axis mapping techniques, illustrated by the mechanical error offsets 605, and the single axis alignment techniques of the present disclosure, illustrated by the azimuth error map 305. As shown, the single axis alignment techniques of the present disclosure substantially reduce offset reading relative to traditional mechanical axis mapping techniques.

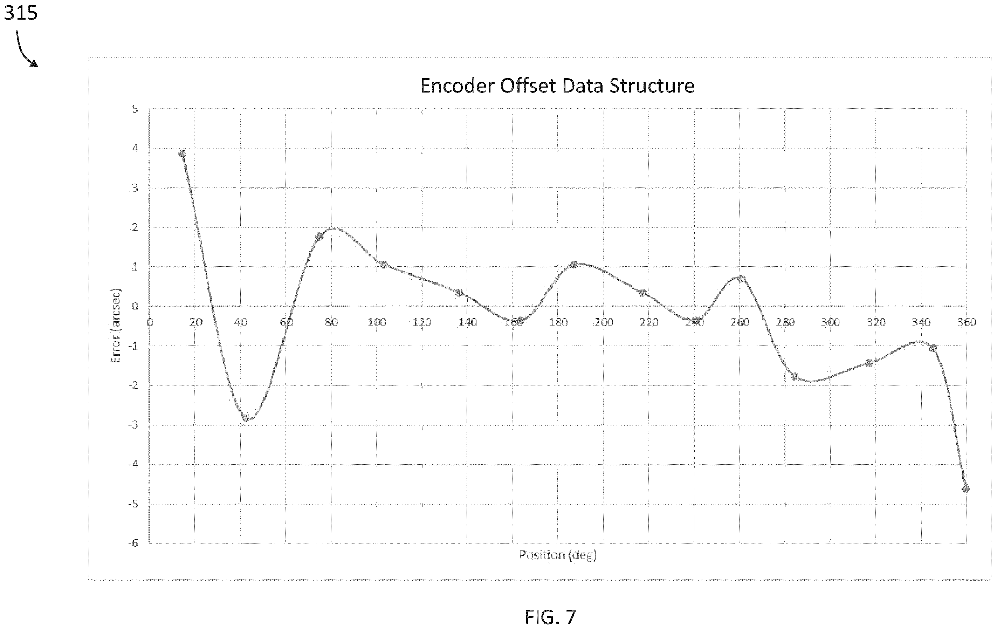

FIG. 7 is an operational example of a portion of an encoder offset data structure 315 in accordance with one or more embodiments of the present disclosure. The portion of the encoder offset data structure 315, for example, may include an offset curve defining a plurality of random encoder offsets. Each encoder offset may correspond to a particular degree within a telescope assembly's range of motion. By way of example, the portion of the encoder offset data structure 315 may include a respective encoder offset for each azimuth degree, or portion of a degree, within the telescopes field of view. Another portion, not depicted, may include a respective encoder offset for each elevation degree, or portion of a degree, within the telescope's field of view.

### III. Example Operations

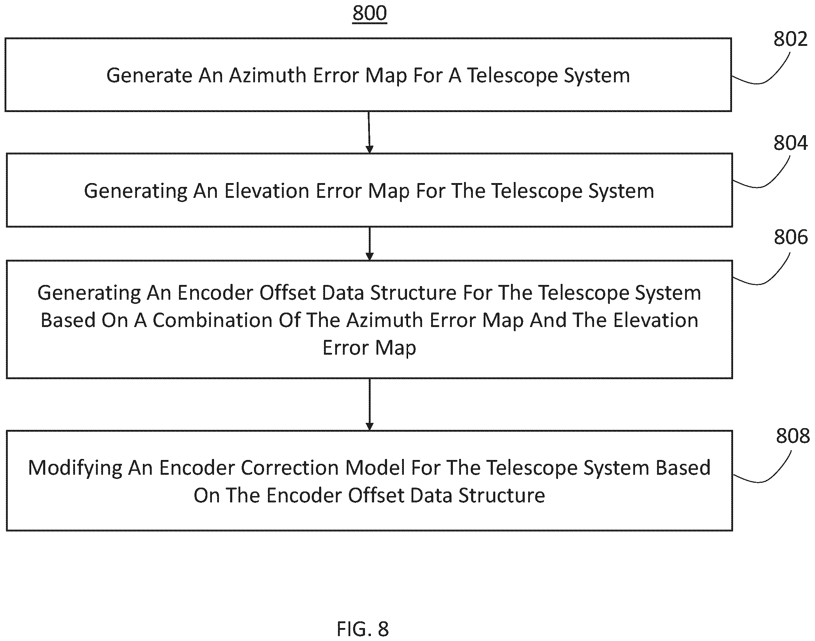

FIG. 8 is a flowchart showing an example multi-stage calibration process 800 for a calibrating a telescope system in accordance with some embodiments discussed herein. The flowchart depicts a multi-stage process 800 for improving the calibration of a telescope system relative to traditional techniques, such as mechanical axis alignment. The process 800 may be implemented by one or more computing devices, entities, and/or systems described herein. For example, via the various steps/operations of the process 800, a computing entity may leverage improved calibration techniques to generate multiple error maps tailored to individual axes of a telescope system. By doing so, the process 800 enables an automated calibration process that may combine finetuned error mappings to create an encoder offset data structure that more accurately reflects positional offsets of a telescope system.

FIG. 8 illustrates an example process 800 for explanatory purposes. Although the example process 800 depicts a particular sequence of steps/operations, the sequence may be altered without departing from the scope of the present disclosure. For example, some of the steps/operations depicted may be performed in parallel or in a different sequence that does not materially impact the function of the process 800. In other examples, different components of an example device or system that implements the process 800 may perform functions at substantially the same time or in a specific sequence.

In some embodiments, the process 800 includes, at step/operation 802, generating an azimuth error map for a telescope system. For example, a computing entity may generate the azimuth error map for a telescope system. For instance, the computing entity may establish an elevation angle range for the telescope system. The computing entity may generate a plurality of azimuth-based encoder errors for the telescope system using the elevation angle range. For example, each of the plurality of azimuth-based encoder errors may correspond to a particular azimuth angle. The plurality of azimuth-based encoder errors may include a respective azimuth-based encoder error for each azimuth angle between zero and three-hundred and sixty degrees (and/or one or more portions thereof that cover a telescope system's full range of motion).

In some embodiments, the computing entity establishes an azimuth angle range for the telescope system and identifies a plurality of celestial objects within a field of view of the telescope system. The computing entity may generate each azimuth-based encoder error based on a measured position and a ground truth position corresponding to at least one of the plurality of celestial objects.

In some examples, the elevation angle range includes one or more elevation angles within a five-degree range. The five-degree range, for example, may be between fifteen and twenty degrees. In some examples, the elevation angle range may be based on a number of celestial objects within a field of view of the telescope system at one or more azimuth angles between zero and three-hundred and sixty degrees.

In some embodiments, the process 800 includes, at step/operation 804, generating an elevation error map for a telescope system. For example, the computing entity may generate the elevation error map for the telescope system. For instance, the computing entity may establish an azimuth angle range for the telescope system. The computing entity may generate a plurality of elevation-based encoder errors for the telescope system using the azimuth angle range. In some examples, each of the plurality of elevation-based encoder errors may correspond to a particular elevation angle. For example, the plurality of elevation-based encoder errors may include a respective elevation-based encoder error for each angle between zero and one-hundred and eighty degrees (and/or one or more portions thereof that cover a telescope system's full range of motion).

In some embodiments, the computing entity establishes an elevation angle range for the telescope system and identifies a plurality of celestial objects with a field of view of the telescope system. The computing entity may generate each elevation-based encoder error based on a measured position and a ground truth position corresponding to at least one of the plurality of celestial objects.

In some examples, the azimuth angle range may include one or more azimuth angles within a five-degree range. For example, the azimuth angle range may be based on a number of celestial objects within a field of view of the telescope system at one or more elevation angles between zero and one-hundred and eighty degrees.

In some embodiments, the process 800 includes, at step/operation 806, generating an encoder offset data structure for the telescope system based on a combination of the azimuth error map and the elevation error map. For example, the computing entity may generate the encoder offset data structure for the telescope system based on the combination of the azimuth error map and the elevation error map. The encoder offset data structure, for example, may include a lookup table with a plurality of encoder offset values and each encoder offset value may correspond to a particular azimuth angle and a particular elevation angle.

In some embodiments, the process 800 includes, at step/operation 808, modifying an encoder correction model for the telescope system based on the encoder offset data structure. For example, a computing entity may modify the encoder correction model for the telescope system based on the encoder offset data structure.

### IV. Computer Program Products, Methods, and Computing Entities

Embodiments of the present disclosure may be implemented in various ways, including as computer program products that comprise articles of manufacture. Such computer program products.

### V. Example Computing Framework

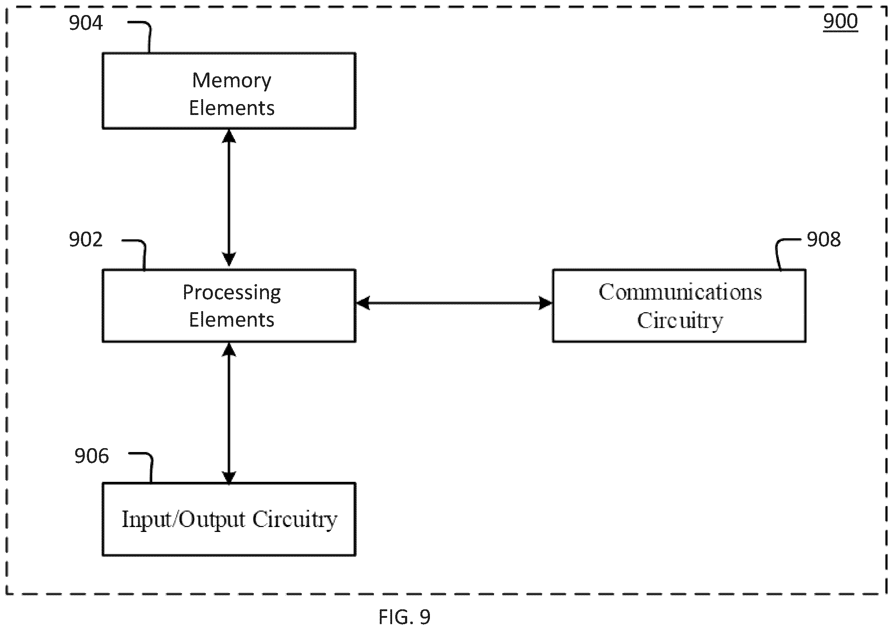

FIG. 9 provides a schematic of a computing entity 900 according to one or more embodiments of the present disclosure. In general, the terms computing entity, computer, entity, device, system, and/or similar words used herein interchangeably may refer to, for example, one or more computers, computing entities, desktops, mobile phones, tablets, notebooks, laptops, distributed systems, kiosks, input terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In some embodiments, these functions, operations, and/or processes may be performed on data, content, information, and/or similar terms used herein interchangeably.

The computing entity 900 may include, or be in communication with, one or more processing elements 902 (also referred to as processors, processing circuitry, and/or similar terms used herein interchangeably) that communicate with other elements within the computing entity 900 via a bus, for example. As will be understood, the processing element 902 may be embodied in a number of different ways.

For example, the processing element 902 may be embodied as one or more complex programmable logic devices (CPLDs), microprocessors, multi-core processors, coprocessing entities, application-specific instruction-set processors (ASIPs), microcontrollers, and/or controllers. Further, the processing element 902 may be embodied as one or more other processing devices or circuitry. The term circuitry may refer to an entirely hardware embodiment or a combination of hardware and computer program products. Thus, the processing element 902 may be embodied as integrated circuits, application specific integrated circuits (ASICs), field programmable gate arrays (FPGAs), programmable logic arrays (PLAs), hardware accelerators, other circuitry, and/or the like.

As will therefore be understood, the processing element 902 may be configured for a particular use or configured to execute instructions stored in volatile or non-volatile media or otherwise accessible to the processing element 902. As such, whether configured by hardware or computer program products, or by a combination thereof, the processing element 902 may be capable of performing steps or operations according to embodiments of the present disclosure when configured accordingly.

In some embodiments, the computing entity 900 may further include, or be in communication with, one or more memory elements 904. The memory elements 904 may include non-volatile media (also referred to as non-volatile storage, memory, memory storage, memory circuitry and/or similar terms used herein interchangeably). In some embodiments, the non-volatile storage or memory may include one or more non-volatile storage or memory media, including, but not limited to, hard disks, ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like.

As will be recognized, the non-volatile storage or memory media may store databases, database instances, database management systems, data, applications, programs, program modules, scripts, source code, object code, byte code, compiled code, interpreted code, machine code, executable instructions, and/or the like. The term database, database instance, database management system, and/or similar terms used herein interchangeably may refer to a collection of records or data that is stored in a computer-readable storage medium using one or more database models, such as a hierarchical database model, network model, relational model, entity-relationship model, object model, document model, semantic model, graph model, and/or the like.

In some embodiments, the memory elements 904 may include volatile media (also referred to as volatile storage memory, memory storage, memory circuitry and/or similar terms used herein interchangeably). In some embodiments, the volatile storage or memory may also include one or more volatile storage or memory media 904, including, but not limited to, RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory, register memory, and/or the like.

As will be recognized, the volatile storage or memory media may be used to store at least portions of the databases, database instances, database management systems, data, applications, programs, program modules, scripts, source code, object code, byte code, compiled code, interpreted code, machine code, executable instructions, and/or the like being executed by, for example, the processing element 902. Thus, the databases, database instances, database management systems, data, applications, programs, program modules, scripts, source code, object code, byte code, compiled code, interpreted code, machine code, executable instructions, and/or the like may be used to control certain aspects of the operation of the computing entity 900 with the assistance of the processing element 902 and operating system.

As indicated, in some embodiments, the computing entity 900 may also include one or more communications circuitry 908 for communicating with various computing entities, such as by communicating data, content, information, and/or similar terms used herein interchangeably that may be transmitted, received, operated on, processed, displayed, stored, and/or the like. Such communication may be executed using a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. Similarly, the computing entity 900 may be configured to communicate via wireless external communication networks using any of a variety of protocols, such as general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.9 (Wi-Fi), Wi-Fi Direct, 802.16 (WiMAX), ultra-wideband (UWB), infrared (IR) protocols, near field communication (NFC) protocols, Wibree, Bluetooth protocols, wireless universal serial bus (USB) protocols, and/or any other wireless protocol.

The computing entity 900 may include input/output circuitry 906 for communicating with one or more users. The input/output circuitry 90, for example, may include one or more user interfaces for providing and/or received information from one or more users of the computing entity 900. The input/output interfaces may include one or more tactile interfaces (e.g., keypads, touch screens, etc.), one or more audio interfaces (e.g., microphones, speakers, etc.), visual interfaces (e.g., display devices, etc.), and/or the like. The input/output circuitry 906 may be configured to receive user input through one or more of the user interfaces from a user of the computing entity 900 and provide data to a user through the one or more of the user interfaces.

Although not shown, the computing entity 900 may include, or be in communication with, one or more input elements, such as a keyboard input, a mouse input, a touch screen/display input, motion input, movement input, audio input, pointing device input, joystick input, keypad input, and/or the like. The computing entity 900 may also include, or be in communication with, one or more output elements (not shown), such as audio output, video output, screen/display output, motion output, movement output, and/or the like.

### VII. Exemplary External Computing Entity

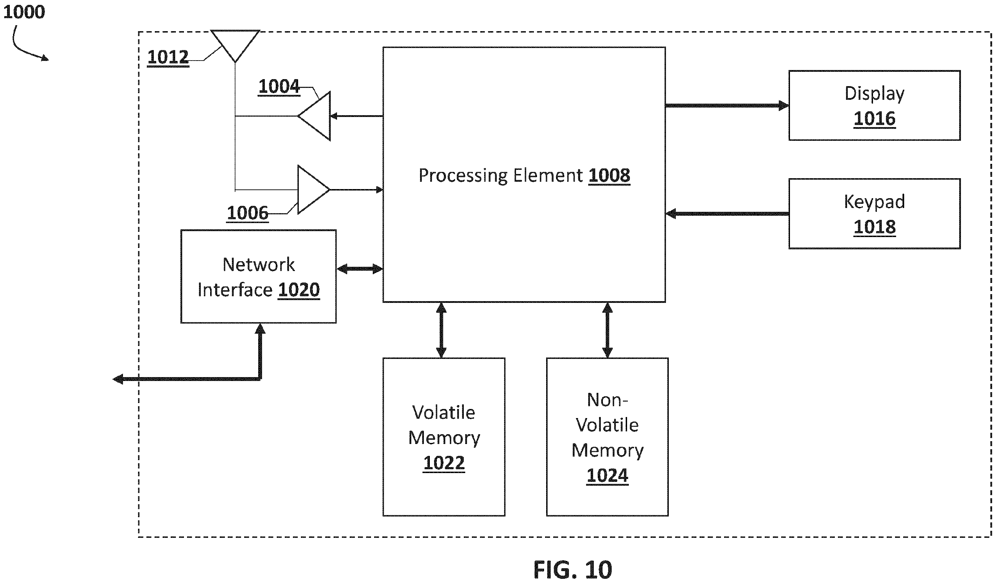

FIG. 10 provides an illustrative schematic representative of an external computing entity 1000 that may be used in conjunction with one or more embodiments of the present disclosure. In general, the terms device, system, computing entity, entity, and/or similar words used herein interchangeably may refer to, for example, one or more computers, computing entities, desktops, mobile phones, tablets, notebooks, laptops, distributed systems, kiosks, input terminals, servers or server networks, blades, gateways, switches, processing devices, processing entities, set-top boxes, relays, routers, network access points, base stations, the like, and/or any combination of devices or entities adapted to perform the functions, operations, and/or processes described herein. External computing entities 1000 may be operated by various parties. As shown in FIG. 10, the external computing entity 1000 may include a transmitter 1004 (e.g., radio), a receiver 1006 (e.g., radio), and a processing element 1008 (e.g., CPLDs, microprocessors, multi-core processors, coprocessing entities, ASIPs, microcontrollers, and/or controllers) that provides signals to and receives signals from the transmitter 1004 and receiver 1006, correspondingly. The transmitter 1004 and/or the receiver 1006 may include digital circuitry for one or more different antenna systems 1012. The antenna systems 1012, for example, may include one or more different types of antenna hardware such as, for example, short dipole antennas, dipole antennas, loop antennas, monopole antennas, and/or the like for receiving and/or transmitting one or more radio signals.

The signals provided to and received from the transmitter 1004 and the receiver 1006, correspondingly, may include signaling information/data in accordance with air interface standards of applicable wireless systems. In this regard, the external computing entity 1000 may be capable of operating with one or more air interface standards, communication protocols, modulation types, and access types. More particularly, the external computing entity 1000 may operate in accordance with any of a number of wireless communication standards and protocols, such as those described above with regard to the computing entity 900. In a particular embodiment, the external computing entity 1000 may operate in accordance with multiple wireless communication standards and protocols, such as UMTS, CDMA2000, 1xRTT, WCDMA, GSM, EDGE, TD-SCDMA, LTE, E-UTRAN, EVDO, HSPA, HSDPA, Wi-Fi, Wi-Fi Direct, WiMAX, UWB, IR, NFC, Bluetooth, USB, and/or the like. Similarly, the external computing entity 1000 may operate in accordance with multiple wired communication standards and protocols, such as those described above with regard to the computing entity 900 via a network interface 1020.

Via these communication standards and protocols, the external computing entity 1000 may communicate with various other entities using concepts such as Unstructured Supplementary Service Data (USSD), Short Message Service (SMS), Multimedia Messaging Service (MMS), Dual-Tone Multi-Frequency Signaling (DTMF), and/or Subscriber Identity Module Dialer (SIM dialer). The external computing entity 1000 may also download changes, add-ons, and updates, for instance, to its firmware, software (e.g., including executable instructions, applications, program modules), and operating system.

According to one embodiment, the external computing entity 1000 may include location determining aspects, devices, modules, functionalities, and/or similar words used herein interchangeably. For example, the external computing entity 1000 may include outdoor positioning aspects, such as a location module adapted to acquire, for example, latitude, longitude, altitude, geocode, course, direction, heading, speed, universal time (UTC), date, and/or various other information/data. In some embodiments, the location module may acquire data, sometimes known as ephemeris data, by identifying the number of satellites in view and the relative positions of those satellites (e.g., using global positioning systems (GPS)). The satellites may be a variety of different satellites, including Low Earth Orbit (LEO) satellite systems, Department of Defense (DOD) satellite systems, the European Union Galileo positioning systems, the Chinese Compass navigation systems, Indian Regional Navigational satellite systems, and/or the like. This data may be collected using a variety of coordinate systems, such as the Decimal Degrees (DD); Degrees, Minutes, Seconds (DMS); Universal Transverse Mercator (UTM); Universal Polar Stereographic (UPS) coordinate systems; and/or the like.

Alternatively, the location information/data may be determined by triangulating the external computing entity's 1000 position in connection with a variety of other systems, including cellular towers, Wi-Fi access points, and/or the like. Similarly, the external computing entity 1000 may include indoor positioning aspects, such as a location module adapted to acquire, for example, latitude, longitude, altitude, geocode, course, direction, heading, speed, time, date, and/or various other information/data. Some of the indoor systems may use various position or location technologies including RFID tags, indoor beacons or transmitters, Wi-Fi access points, cellular towers, nearby computing devices (e.g., smartphones, laptops) and/or the like. For instance, such technologies may include the iBeacons, Gimbal proximity beacons, Bluetooth Low Energy (BLE) transmitters, NFC transmitters, and/or the like. These indoor positioning aspects may be used in a variety of settings to determine the location of someone or something to within inches or centimeters.

The external computing entity 1000 may also comprise a user interface (that may include a display 1016 coupled to a processing element 1008) and/or a user input interface (coupled to a processing element 1008). For example, the user interface may be a user application, browser, user interface, and/or similar words used herein interchangeably executing on and/or accessible via the external computing entity 1000 to interact with and/or cause display of information/data from the computing entity 900, as described herein. The user input interface may comprise any of a number of devices or interfaces allowing the external computing entity 1000 to receive data, such as a keypad 1018 (hard or soft), a touch display, voice/speech or motion interfaces, or other input device. In embodiments including a keypad 1018, the keypad 1018 may include (or cause display of) the conventional numeric (0-9) and related keys (#, *), and other keys used for operating the external computing entity 1000 and may include a full set of alphabetic keys or set of keys that may be activated to provide a full set of alphanumeric keys. In addition to providing input, the user input interface may be used, for example, to activate or deactivate certain functions, such as screen savers and/or sleep modes.

The external computing entity 1000 may also include volatile storage or memory 1022 and/or non-volatile storage or memory 1024, which may be embedded and/or may be removable. For example, the non-volatile memory may be ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like.

The volatile memory may be RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory, register memory, and/or the like. The volatile and nonvolatile storage or memory may store databases, database instances, database management systems, data, applications, programs, program modules, scripts, source code, object code, byte code, compiled code, interpreted code, machine code, executable instructions, and/or the like to implement the functions of the external computing entity 1000. As indicated, this may include a user application that is resident on the entity or accessible through a browser or other user interface for communicating with the computing entity 900 and/or various other computing entities.

In another embodiment, the external computing entity 1000 may include one or more components or functionality that are the same or similar to those of the computing entity 900, as described in greater detail above. As will be recognized, these architectures and descriptions are provided for exemplary purposes only and are not limiting to the various embodiments.

In various embodiments, the external computing entity 1000 may be embodied as an artificial intelligence (AI) computing entity, such as an Amazon Echo, Amazon Echo Dot, Amazon Show, Google Home, and/or the like. Accordingly, the external computing entity 1000 may be configured to provide and/or receive information/data from a user via an I/O mechanism, such as a display, a camera, a speaker, a voice-activated input, and/or the like. In certain embodiments, an AI computing entity may comprise one or more predefined and executable program algorithms stored within an onboard memory storage module, and/or accessible over a network. In various embodiments, the AI computing entity may be configured to retrieve and/or execute one or more of the predefined program algorithms upon the occurrence of a predefined trigger event.

### VI. Conclusion

While this specification contains many specific embodiment and implementation details, these should not be construed as limitations on the scope of any disclosures or of what may be claimed, but rather as descriptions of features specific to particular embodiments of particular disclosures. Certain features that are described herein in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

Thus, while particular embodiments of the subject matter have been described, other embodiments are within the scope of the following claims.

## Claims

1. A telescope alignment method, comprising:
generating an azimuth error map for a telescope system;
generating an elevation error map for the telescope system;
generating an encoder offset data structure for the telescope system based on a combination of the azimuth error map and the elevation error map; and
modifying an encoder correction model for the telescope system based on the encoder offset data structure.

2. The telescope alignment method of claim 1, wherein the encoder offset data structure comprises a lookup table with a plurality of encoder offset values and each encoder offset value corresponds to a particular azimuth angle and a particular elevation angle.

3. The telescope alignment method of claim 1 or 2, wherein generating the azimuth error map for the telescope system comprises:
establishing an elevation angle range for the telescope system; and
generating a plurality of azimuth-based encoder errors for the telescope system, wherein each of the plurality of azimuth-based encoder errors correspond to a particular azimuth angle and the plurality of azimuth-based encoder errors comprise a respective azimuth-based encoder error for each azimuth angle between zero and three-hundred and sixty degrees.

4. The telescope alignment method of claim 3, wherein the elevation angle range comprises one or more elevation angles within a five-degree range.

5. The telescope alignment method of claim 4, wherein the five-degree range is between fifteen and twenty degrees.

6. The telescope alignment method of claim 4, wherein the elevation angle range is based on a number of celestial objects within a field of view of the telescope system at one or more azimuth angles between zero and three-hundred and sixty degrees.

7. The telescope alignment method of claim 3, wherein generating an azimuth-based encoder error of the plurality of azimuth-based encoder errors comprises:
establishing an azimuth angle range for the telescope system;
identifying a plurality of celestial objects within a field of view of the telescope system; and
generating the azimuth-based encoder error based on a measured position and a ground truth position corresponding to at least one of the plurality of celestial objects.

8. The telescope alignment method of claims 1 or 2, wherein generating the elevation error map for the telescope system comprises:
establishing an azimuth angle range for the telescope system;
generating a plurality of elevation-based encoder errors for the telescope system, wherein each of the plurality of elevation-based encoder errors correspond to a particular elevation angle and the plurality of elevation-based encoder errors comprise a respective elevation-based encoder error for each angle between zero and one-hundred and eighty degrees.

9. The telescope alignment method of claim 8, wherein the azimuth angle range comprises one or more azimuth angles within a five-degree range.

10. The telescope alignment method of claim 8, wherein the azimuth angle range is based on a number of celestial objects within a field of view of the telescope system at one or more elevation angles between zero and one-hundred and eighty degrees.

11. The telescope alignment method of claim 8, wherein generating an elevation-based encoder error of the plurality of elevation-based encoder errors comprises:
establishing an elevation angle range for the telescope system;
identifying a plurality of celestial objects with a field of view of the telescope system; and
generating the elevation-based encoder error based on a measured position and a ground truth position corresponding to at least one of the plurality of celestial objects.

12. A computing system comprising memory and one or more processors communicatively coupled to the memory, the one or more processors configured to perform the telescope alignment method of claims 1 through 11.

13. One or more non-transitory computer-readable storage media including instructions that, when executed by one or more processors, cause the one or more processors to perform the telescope alignment method of claims 1 through 11.
